# EUROPEAN PATENT APPLICATION

(11) **EP 3 806 443 A1**
(43) Date of publication of application: **14.04.2021**
(21) Application number: 18921273.1
(22) Date of filing: 29.05.2018
(51) Int. Cl.: H04N 5/232

(54) **TRACKING PHOTOGRAPHING METHOD AND APPARATUS, AND STORAGE MEDIUM**

(71) Applicant: SZ DJI Technology Co., Ltd., Shenzhen, Guangdong 518057 (CN)
(72) Inventor: WANG, Genyuan, Shenzhen, Guangdong 518057 (CN); CEN, Xianlong, Shenzhen, Guangdong 518057 (CN)
(74) Representative: Appelt, Christian W.
(86) International application number: PCT/CN2018/088862
(87) International publication number: WO 2019/227309

(57) **Abstract**

Embodiments of the present disclosure provide a tracking shot method and device, and a storage medium. The method includes determining object feature information used to describe a target object based on an obtained tracking trigger operation; obtaining display position information of the target object set on a screen displaying a preview image; and controlling an imaging device to perform tracking shot on the target object to obtain a target image based on the object feature information and the display position information. By using this method, the tracking shot setting can be quickly realized, which is especially suitable for small display screens, which improves the flexibility of tracking shot.

## Description

### TECHNICAL FIELD

The present disclosure relates to the technical field of control technology and, more specifically, to a tracking shot method and device, and a storage medium.

### BACKGROUND

With the popularization of smart imaging devices, especially gimbals, unmanned aerial vehicles (UAVs), and various cameras, some smart imaging and video capturing technologies have gradually become popular among users. Among them, tracking shot is an auxiliary imaging method that has become popular in recent years. At present, tracking shot applied to smart imaging is generally realized by connecting a control terminal of the imaging device. For example, a user controls the UAV to capture images in flight through the mobile phone, then the user will realize tracking shot of an object by using frame selection of the corresponding object in the UAV application software on the mobile phone. At this time, the control terminal such as a mobile phone generally has a relatively large display screen, which is convenient for users to perform frame selection operation. However, in some cases, when the imaging device, such as a gimbal, has a small display screen, the user still needs to connect to an external control terminal, such as a mobile phone, to complete the frame selection operation to achieve tracking shot, which can be very inconvenient. Therefore, improving the convenience for users to complete the setting of tracking shot on the display screen of the imaging device is an issue that needs to be addressed.

### SUMMARY

The embodiments of the present disclosure provide a tracking shot method and device, and a storage medium, which can conveniently allow users to quickly implement tracking shot settings, and is particular suitable for small display screens.

In a first aspect, an embodiment of the present disclosure provides a tracking shot method including determining object feature information used to describe a target object based on an obtained tracking trigger operation, obtaining display position information of the target object set on a screen displaying a preview image, and controlling an imaging device to perform tracking shot on the target object to obtain a target image based on the object feature information and the display position information.

In a second aspect, an embodiment of the present disclosure provides a tracking shot device including a processor and a memory storing program instructions. When executed by the processor, the program instructions cause the processor to determine object feature information used to describe a target object based on an obtained tracking trigger operation, obtain display position information of the target object set on a screen displaying a preview image, and control an imaging device to perform tracking shot on the target object to obtain a target image based on the object feature information and the display position information.

In a third aspect, an embodiment of the present disclosure provides a computer-readable storage medium storing a computer program that, when executed by a processor, implements the tracking shot method as described in the first aspect above.

In the embodiments of the present disclosure, by determining the object feature information used to describe the target object by obtaining the tracking trigger operation, obtaining the display position information of the target object, and controlling the imaging device to perform tracking shot on the target object to obtain the target image based on the obtained object feature information and the display position information, quick implementation of tracking shot setting can be realized, which is especially suitable for small display screens, and improves the flexibility of tracking shot.

### BRIEF DESCRIPTION OF THE DRAWINGS

In order to illustrate the technical solutions in accordance with the embodiments of the present disclosure or existing technology more clearly, the accompanying drawings to be used in the embodiments are described briefly in the following. It is apparent that the accompanying drawings in the following description are only some embodiments of the present disclosure. Persons of ordinary skill in the art can obtain other accompanying drawings in accordance with the accompanying drawings without any creative efforts.
FIG. 1 is a flowchart of a tracking shot method according to an embodiment of the present disclosure.
FIG. 2A is a schematic diagram of an interface for a click operation on a screen displaying a preview image according to an embodiment of the present disclosure.
FIG. 2B is a schematic diagram of an interface for obtaining a target object from a preview image according to an embodiment of the present disclosure.
FIG. 2C is a schematic diagram of an interface for zooming in on a screen displaying a preview image according to an embodiment of the present disclosure.
FIG. 2D is a schematic diagram of an interface of a frame selection operation on a preview image after an enlargement processing according to an embodiment of the present disclosure.
FIG. 3A is a schematic diagram of an interface of the frame selection operation on a screen displaying a preview image according to an embodiment of the present disclosure.
FIG. 3B is a schematic diagram of another interface for obtaining the target object from a preview image according to an embodiment of the present disclosure.
FIG. 4 is a schematic diagram of an interface of a target image according to an embodiment of the present disclosure.
FIG. 5 is a flowchart of another tracking shot method according to an embodiment of the present disclosure.
FIG. 6 is a flowchart of another tracking shot method according to an embodiment of the present disclosure.
FIG. 7 is a flowchart of another tracking shot method according to an embodiment of the present disclosure.
FIG. 8 is a schematic structural diagram of a tracking shot device according to an embodiment of the present disclosure.

### DETAILED DESCRIPTION OF THE EMBODIMENTS

Technical solutions of the present disclosure will be described in detail with reference to the drawings. It will be appreciated that the described embodiments represent some, rather than all, of the embodiments of the present disclosure. Other embodiments conceived or derived by those having ordinary skills in the art based on the described embodiments without inventive efforts should fall within the scope of the present disclosure.

Exemplary embodiments will be described with reference to the accompanying drawings. In the case where there is no conflict between the exemplary embodiments, the features of the following embodiments and examples may be combined with each other.

The tracking shot method provided by the embodiments of the present disclosure can be applied to a tracking shot device. More specifically, the tracking shot device may be any one or more of terminal devices such as smart phones, tablets, laptops, and wearable devices (watches, bracelets). In some embodiments, the tracking shot device may be set on a gimbal of a UAV, and an imaging device may be carried by the gimbal. Alternatively, in other embodiments, the tracking shot device may also be disposed on a terminal device that can establish a communication connection with the gimbal of the UAV. The tracking shot method will be described below using the tracking shot method applied to a UAV as an example.

In the embodiments of the present disclosure, the tracking shot device can obtain a tracking trigger operation of the user on the screen displaying the preview image, determine the object feature information used to describe the target object based on the tracking trigger operation, and send the object feature information to the imaging device carried by the gimbal, such that the imaging device can initialize the object feature information. The tracking shot device can determine the target object based on the initialized object feature information, and control the imaging device to perform tracking shot on the target object to obtain a target image based on the obtained display position information of the target object set by the user on the screen displaying the preview image. After controlling the imaging device to capture the target image, the tracking shot device can determine the tracking information of the target object on the target image based on the obtained object feature information used to describe the target object, and generate a control instruction for adjusting the gimbal based on the display position information and the tracking information. The tracking shot device may send the control instruction to the gimbal, such that the gimbal can control the rotation of the gimbal based on the control instruction, thereby controlling the rotation of the gimbal to control the adjustment of the imaging angle of the imaging device, and further adjusting the target image captured by the imaging device to improve the accuracy of tracking shot.

In some embodiments, the tracking trigger operation obtained by the tracking shot device may be a click operation or a frame selection operation. The click operation may be any one or more of a signal click operation, a double click operation, and a long press operation obtained on the screen displaying the preview image, or it may also be one or more of a signal click operation, a double click operation, and a long press operation obtained on an application APP on the screen displaying the preview image. The frame selection operation may be a frame selection operation obtained on the screen displaying the preview image, or may be a frame selection operation obtained on the application APP on the screen displaying the preview image. The screen displaying the preview image may be a screen of the tracking shot device, or the screen of a mobile terminal, such as a mobile phone that can establish a communication connection with the tracking shot device. The screen size of the tracking shot device may be a small screen, such as a 3×3 cm² screen, or a screen of any size. The embodiments of the present disclosure do not specifically limit the screen size of the tracking shot device.

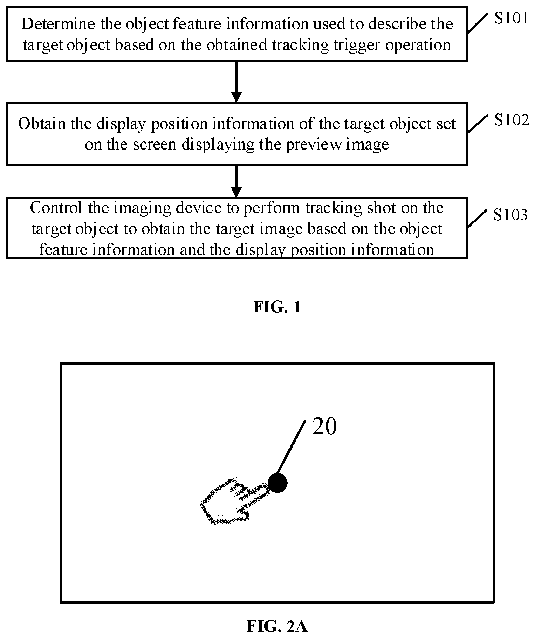

Refer to FIG. 1. FIG. 1 is a flowchart of a tracking shot method according to an embodiment of the present disclosure. The method can be executed by a tracking shot device, where the specific explanation of the tracking shot device may be as described above. More specifically, the method of the embodiments of the present disclosure includes the following processes.

S101, determining the object feature information used to describe the target object based on an obtained tracking trigger operation.

In the embodiments of the present disclosure, the tracking shot device may be configured to determine the object feature information used to describe the target object based on the obtained tracking trigger operation. In some embodiments, the tracking trigger operation may be a click operation or a frame selection operation. The embodiments of the present disclosure do not specifically limit the form of the trigger operation. The object feature information may include any one or more of the length, width, and coordinate information of the image area, which is not specifically limited in the embodiments of the present disclosure.

In one embodiment, the tracking shot device may obtain the user's click operation on the screen displaying the preview image, and determine the clicked image area based on the click operation, thereby obtaining the object feature information describing the target object in the clicked image area based on the clicked image area. In some embodiments, the object feature information may include any one or more of the length, width, and coordinate information of the clicked image area determined by the click operation. The click operation may be a signal click operation, a double click operation, or a long press operation.

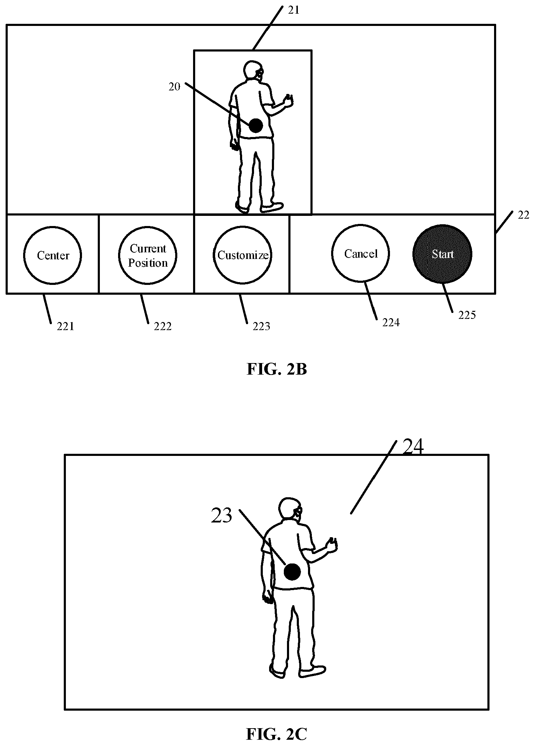

The details can be illustrated by using FIG. 2A and FIG. 2B as examples. FIG. 2A is a schematic diagram of an interface for a click operation on a screen displaying a preview image according to an embodiment of the present disclosure, and FIG. 2B is a schematic diagram of an interface for obtaining a target object from a preview image according to an embodiment of the present disclosure. The interface schematic diagram shown in FIG. 2A is a preview image taken by the imaging device and displayed on the screen. The user can automatically determine a clicked image area 21 shown in FIG. 2A by clicking on a point 20 on the screen displaying the preview image in FIG. 2A, use the image in the clicked image area 21 as the target object, and obtain the object feature information describing the target object in the clicked image area 21 based on the clicked image area 21, that is, the length, width, coordination information, etc. of the clicked image area 21 shown in FIG. 2A. When the clicked image area 21 is determined, a menu 22 may also be displayed on the screen displaying the preview image. In some embodiments, the menu 22 may include options for indicating the display position information such as center 221, current position 222, customize 223, cancel 224, and start 225. Assume that the click operation on the point 20 on the preview image screen shown in FIG. 2A is a single click operation, then the tracking shot device may obtain the clicked image area 21 as shown in FIG. 2B determined by the click operation, obtain the object feature information, such as the length, width, and coordinate information of the clicked image area 21, and determine the object in the clicked image area 21 as the target object.

In one embodiment, the tracking shot device may determine a target point by obtaining the click operation, perform object estimation detection on the preview image with the target point as the center to determine the target object, to determine the clicked image area based on the target object, thereby obtaining the object feature information used to describe the target object in the clicked image area based on the clicked image area.

In a specific implementation process, the tracking shot device may determine the coordinate position of the target point based on the obtained click operation, and use the target point as the center to detect whether there is an object on the preview image by using a predetermined detection algorithm on the preview image. If there is an object on the preview image, the target object may be determined, and the clicked image area can be determined based on the target object, thereby determining the object feature information, such as the length, width, and coordinate information of the clicked image area of the target object. In some embodiments, the predetermined detection algorithm may be any one or more detection algorithms used to determine the target object, and the embodiments of the present disclosure do not specifically limit the predetermined detection algorithm. For example, assume that the predetermined detection algorithm is a saliency algorithm, through the saliency algorithm, the tracking shot device may obtain the size and position information of the most significant object included in the coordinate information of the target object, and determine it as the target object.

In one embodiment, the tracking shot device may obtain the target point determined by the click operation, perform image enlargement processing on the preview image based on a predetermined ratio with the target point as the center, obtain the frame selected image area determined by the frame selection operation of the enlarged preview image, and obtain the object feature information used to describe the target object in the frame selected image area based on the frame selected image area. In a specific implementation process, assume that the click operation obtained by the tracking shot device is a click operation, then the tracking shot device may obtain the target point determined by the user's click operation on the tracking shot device, and take the target point as the center to obtain an image after the user enlarges the preview image on the tracking shot device based on the predetermined ratio. The user may perform a frame selection operation on the enlarged preview image. The tracking shot device may obtain the frame selected image area determined by the user frame selection operation, and determine the object feature information used to describe the length, width, coordinate information, etc. of the frame selected image area.

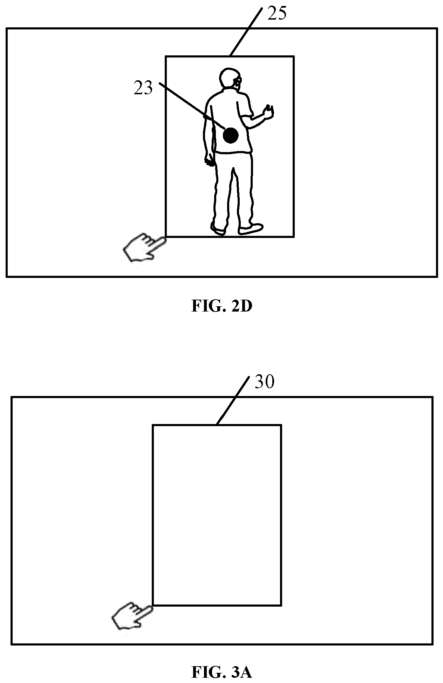

The details can be illustrated by using FIG. 2C and FIG. 2D as examples. FIG. 2C is a schematic diagram of an interface for zooming in on a screen displaying a preview image according to an embodiment of the present disclosure, and FIG. 2D is a schematic diagram of an interface of a frame selection operation on a preview image after enlargement processing according to an embodiment of the present disclosure. Assume that the click operation obtained by the tracking shot device is a click operation on a target point 23 shown in FIG. 2C, the tracking shot device may be configured to obtain the coordinate information of the target point 23 determined by the user's click operation on the tracking shot device, and use the target point 23 as the center to obtain an image 24 after the user enlarges the preview image based on the predetermined ratio on the tracking shot device. The user may perform a frame selection operation on the enlarged preview image 24 as shown in FIG. 2D, and the tracking shot device may obtain a frame selected image area 25 determined by the user's frame selection operation, and determine the object feature information used to describe the length, width, coordinate information, etc. of the frame selected image area 25.

In other embodiments, when the selected image area is determined, the screen that displays the preview image may not have a menu, but only the preview image. The details can be described using FIG. 2A as an example. Assume that the click operation obtained on the point 20 on the screen displaying the preview image in FIG. 2A is a long press operation, the tracking shot setting may be triggered to be turned on. That is, after the user press and hold the point 20 on the preview screen in FIG. 2A for more than a certain period of time, the tracking shot device may determine that the user has enabled the tracking shot, and may obtain the clicked image area 21 determined by the user long-pressing the point 20.

In one embodiment, the tracking shot device may obtain the frame selection operation on the screen displaying the preview image, determine the frame selected image area based on the frame selection operation, and obtain the object feature information used to describe the target object in the frame selected image area based on the frame selected image area. In a specific implementation process, the screen displaying the preview image may be the screen of the tracking shot device, the screen of the APP on the track device, the screen of the mobile terminal that can establish a communication connection with the tracking shot device, or the screen of the APP on the mobile terminal. The tracking shot device may obtain the frame selection operation on the screen of the mobile terminal displaying the preview image, determine the frame selected image area based on the frame selection operation, and calculate the length, width, coordinate information, etc. of the frame selected image area to describe the object feature information of the target object in the frame selected image area.

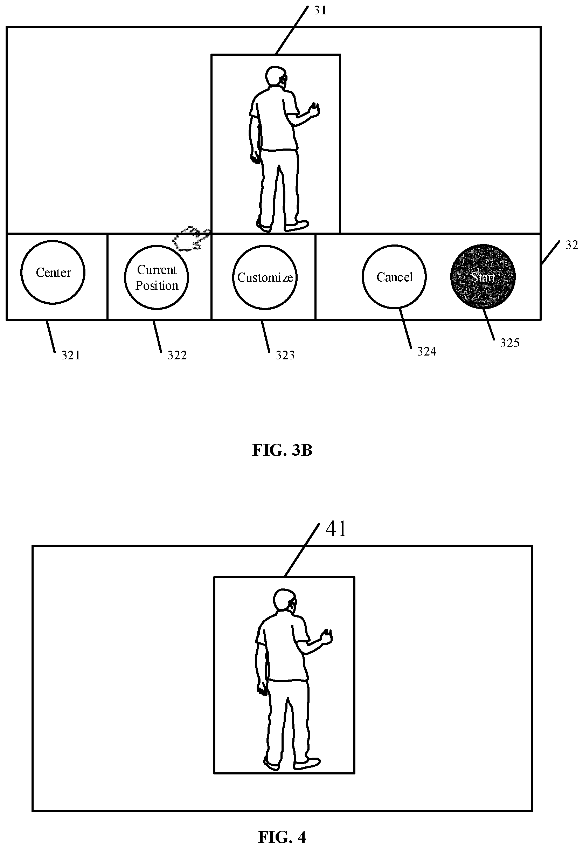

The details can be illustrated by using FIG. 3A and FIG. 3B as examples. FIG. 3A is a schematic diagram of an interface of the frame selection operation on a screen displaying a preview image according to an embodiment of the present disclosure, and FIG. 3B is a schematic diagram of another interface for obtaining the target object from a preview image according to an embodiment of the present disclosure. The schematic diagram of the interface shown in FIG. 3A is a preview image captured by the imaging device and displayed on the screen. The user can perform a frame selection operation on the preview image shown in FIG. 3A to select a frame selection area 30, and determine a frame selected image area 31 shown in FIG. 3B. The frame selected image area 31 may be used as the target object, and object feature information, that is, the length, width, coordinate information, etc. of the frame selected image area 31 as shown in FIG. 3B, used to describe the target object in the frame selected image area 31 may be obtained based on the frame selected image area 31.

S102, obtaining display position information of the target object set on the screen displaying the preview image.

In the embodiments of the present disclosure, the tracking shot device may be configured to obtain the display position information of the target object set on the screen displaying the preview image. In some embodiments, the screen displaying the preview image may be the screen of the tracking shot device, or the screen of the mobile terminal that can establish a communication connection with the tracking shot device. The acquisition of the display position information may be determined based on a user operation on the screen of the tracking shot device display the preview image. The display position information may also be determined based user operation on the screen of the mobile terminal displaying the preview image.

The setting method of the display position information of the target object may include setting by setting a menu on the screen displaying the preview image, and the menu may include a plurality of position indication information options. The tracking shot device may determine the display position information of the target object based on the obtained user's click operation on the position indication information options. In one embodiment, the tracking shot device may be configured to obtain a click operation on the position indication information options included in the menu on the screen of the tracking shot device displaying the preview image, and determine the display position information of the target object based on the obtained position indication information options by the click operation.

The details can be illustrated by using FIG. 2B as an example. The tracking shot device may be configured to obtain a click operation on the position indication information included in the menu 22 set on the tracking shot device screen displaying the preview image. Assume that the user clicks on the center 221 option in the menu 22, the tracking shot device may determine the position indication information of the target object as the center position on the screen displaying the preview image based on the obtained center position indication information determined by the click operation. If the user clicks on the cancel 224 option, the tracking shot device may cancel the display position information set for the target object as the center position on the screen displaying the preview image, and reset the display position information of the target object.

In another example, assume that the tracking shot device obtains the user's click operation on the current position option in the menu 22, the position indication information of the current position 222 determined by the click operation may be obtained, and the display position information of the target object may be determined as the current position of the target object on the screen displaying the preview image. Similarly, if the user clicks on the cancel 224 option, the tracking shot device may cancel the display position information set for the target object as the current position on the screen displaying the preview image, and the user may reset the display position information of the target object.

The setting method of the display position information of the target object may also include obtaining a drag operation of the clicked image area on the screen displaying the preview image, and determining the position information after dragging the clicked image area as the display position information of the target object. In one embodiment, the tracking shot device may be configured to obtain the drag operation on the clicked image area, and determine the display position information of the target object based on the obtained position information of the clicked image area dragged by the drag operation. The details can be illustrated by using FIG. 2B as an example. Assume that the tracking shot device obtains the user's click operation on the customize 223 option in the menu 22, the user may drag the clicked image area 21 of the target object to any position on the screen displaying the preview image, and use the position of the clicked image area 21 after dragging as the display position information of the target object. In another example, the tracking shot device may directly drag the clicked image area 21 of the target object to any position without obtaining the click operation on the customize 223 option in the menu 22, and use the position of the clicked image area 21 after dragging as the display position information of the target object.

S103, controlling the imaging device to perform tracking shot on the target object to obtain a target image based on the object feature information and the display position information.

In the embodiments of the present disclosure, the tracking shot device may control the imaging device to perform tracking shot on the target object to obtain the target image based on the object feature information and the display position information. In a specific implementation process, the tracking shot device may be configured to send the obtained object feature information and the display position information used to describe the target object to the imaging device through a private protocol, such that the imaging device may initialize the object feature information, and perform tracking shot on the target object to obtain the target image based on the obtained display position information after initialization.

The details can be illustrated by using FIG. 2B and FIG. 4 as examples. FIG. 4 is a schematic diagram of an interface of a target image according to an embodiment of the present disclosure. Assume that the object feature information used to describe the target object obtained by the tracking shot device includes the length of the clicked image area 21 being 2 cm, the width being 1 cm, and the GPS coordinate position of the clicked image area 21. If the tracking shot device obtains the display position information of the target object in the clicked image area 21 is the center, when the tracking shot device obtains that the user clicks on the start 225 option in the menu 22, it may send the obtained length, width, GPS coordinate position, and display position information of the clicked image area to the imaging device. As such, the imaging device may initialize the object feature information of the target object in the clicked image area 21. After initialization, tracking shot may be performed on the target object in the clicked image area 21 based on the obtained display position information, and a target image 41 whose display position on the screen is the center as shown in FIG. 4 may be obtained.

In one embodiment, after the tracking shot device controls the imaging device to perform tracking shot on the target object to obtain the target image, it may determine the tracking information of the target object on the target image based on the obtained object feature information used to describe the target object, and send the control instruction to the gimbal. The control instruction may be an instruction determined for adjusting the gimbal based on the display position information and the tracking information. In a specific implementation process, the tracking shot device may be configured to send the obtained object feature information used to describe the target object to an algorithm calculation module. By using the algorithm calculation module, tracking information such as the coordinate information of the target object on the target image and the size information of the image area of the target object may be calculated based on the object feature information set on the screen displaying the preview image and the object feature information of the target image obtained by the imaging device through tracking shot. The tracking shot device may generate a control instruction based on the tracking information and the display position information, and send the control instruction to the gimbal, such that the gimbal may control the rotation of the gimbal based on the control instruction.

In the embodiments of the present disclosure, the tracking shot device can determine the object feature information used to describe the target object through the obtained tracking trigger operation, thereby determining the target object; and determine the display position of the target object on the screen by obtaining the display position information of the target object set on the screen displaying the preview image to control the imaging device to perform tracking shot on the target object to obtain the target image. In addition, after obtaining the target image, the tracking shot device can determine the tracking information of the target object on the target image, and send a control instruction to the gimbal to control the gimbal to rotate based on the control instruction. By using this method, the tracking shot of the target object can be realized, and the imaging angle of the imaging device can be adjusted by control the rotation of the gimbal, such that the tracking shot of the imaging device can obtain more accurate target images, thereby improving the efficiency of tracking shot.

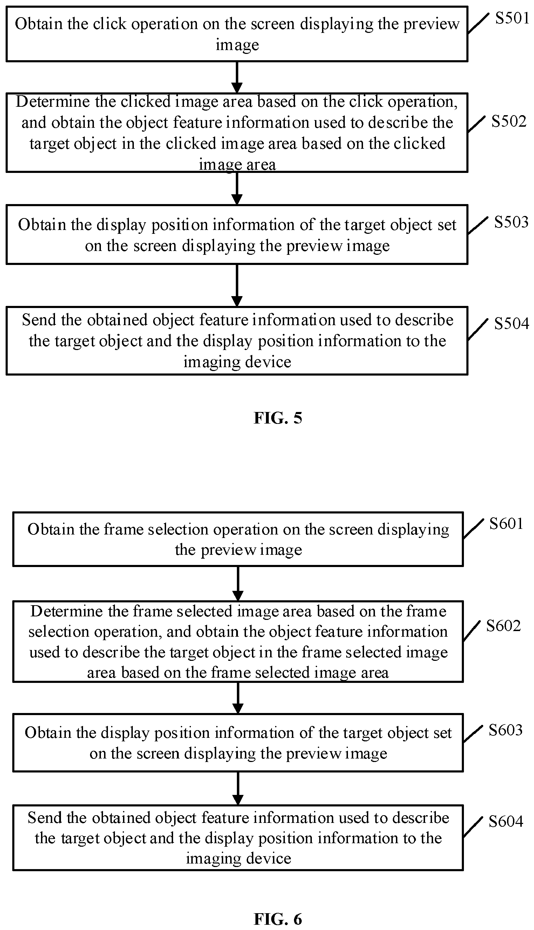

Refer to FIG. 5. FIG. 5 is a flowchart of another tracking shot method according to an embodiment of the present disclosure. The method may be executed by a tracking shot device, where the specific explanation of the tracking shot device may be as described above. More specifically, the method of the embodiments of the present disclosure includes the following processes.

S501, obtaining the click operation on the screen displaying the preview image.

In the embodiments of the present disclosure, the tracking shot device may be configured to obtain the click operation on the screen displaying the preview image. In some embodiments, the screen displaying the preview image may be the screen of the tracking shot device, or the screen of the mobile terminal that can establish a communication connection with the tracking shot device. The screen of the tracking shot device may be a relatively small screen, such as a size of 3×3 cm², or any other size. The embodiments of the present disclosure do not specifically limit the screen size of the tracking shot device.

The click operation may include a single click operation, a double click operation, or a long press operation. In one embodiment, the tracking shot device may obtain the user's single click operation, double click operation, or long press operation on the screen of the tracking shot device displaying the preview image. Alternatively, the tracking shot device may obtain the single click operation, double click operation, or long press operation on the screen of a mobile terminal displaying the preview image, and can establish a communication connection with the tracking shot device.

S502, determining the clicked image area based on the click operation, and obtaining the object feature information used to describe the target object in the clicked image area based on the clicked image area.

In the embodiments of the present disclosure, the tracking shot device may determine the clicked image area based on the click operation, and obtain the object feature information used to describe the target object in the clicked image area based on the clicked image area. In one embodiment, the tracking shot device may determine the clicked image area 21 based on the user's single click operation, double click operation, or long press operation on the screen of the tracking shot device, and obtain the object feature information such as the length, width, coordinate information, etc. used to describe the target object in the clicked image area based on the clicked image area. Alternatively, the tracking shot device may obtain the single click operation, double click operation, or long press operation on the screen of a mobile terminal that can establish a communication connection with the tracking shot device, and obtain the object feature information such as the length, width, coordinate information, etc. of the clicked image area used to describe the target object in the clicked image area based on the obtained clicked image area. The specific examples are as described above, and will not be repeated here.

There are many methods for the tracking shot device to determine the object feature information of the target object. In one embodiment, the tracking shot device may determine a target point by obtaining the click operation, perform object estimation detection on the preview image with the target point as the center to determine the target object, and determine the clicked image area based on the target object, thereby obtaining the object feature information used to describe the target object in the clicked image. In a specific implementation process, the tracking shot device may obtain the coordinate position of the target point determined by the click operation, use the coordinate position of the target point as the center to detect whether there is an object in the preview image, determine the target object, and determine the clicked image area and obtain the object feature information such as the length, width, coordinate information, etc. of the target object used to describe the clicked image area based on the target object. The specific examples are as described above, and will not be repeated here.

In one embodiment, the tracking shot device may obtain the target point determined by the click operation, use the target point as the center to perform image enlargement processing on the preview image based on a predetermined ratio, obtain the frame selected image area determined by the frame selection operation of the enlarged preview image, and obtain the object feature information used to describe the target object in the frame selected image area based on the frame selected image area. In a specific implementation process, the tracking shot device may obtain the target point determined by the click operation, take the target point as the center to perform image enlargement processing on the preview image based on the predetermined ratio, and display the enlarged preview image on the screen of the mobile terminal or the screen of the tracking shot device. The user may perform a frame selection operation on the enlarged preview image, and frame select the frame selected image area. The tracking shot device may obtain the object feature information used to describe the target object in the frame selected image area based on the obtained frame selected image area. The specific examples are as described above, and will not be repeated here.

S503, obtaining the display position information of the target object set on the screen displaying the preview image.

In the embodiments of the present disclosure, the tracking shot device may be configured to obtain the display position information of the target object set on the screen displaying the preview image. In one embodiment, the tracking shot device may obtain the display position information of the target object set by the user on the screen of the tracking shot device. Alternatively, the tracking shot device may obtain the display position information of the target object set by the user on the screen of the mobile terminal that can establish a communication connection with the tracking shot device. The specific examples are as described above, and will not be repeated here.

In one embodiment, the tracking shot device may obtain a click operation on the position indication information included in the menu set on the screen displaying the preview image, and determine the display position information of the target object based on the obtained position indication information determined by the click operation. The specific example is as described above, and will not be repeated here.

In one embodiment, the tracking shot device may obtain the drag operation on the determined clicked image area, and determine the display position information based on the obtained display position information of the clicked image area after the drag operation. The specific example is as described above, and will not be repeated here.

S504, sending the obtained object feature information used to describe the target object and the display position information to the imaging device.

In the embodiments of the present disclosure, the tracking shot device may be configured to send the obtained object feature information used to describe the target object and the display position information to the imaging device, such that the imaging device may initialize the object feature information, and perform tracking shot on the target object to obtain the target image based on the obtained display position information after initialization. The specific example is as described above, and will not be repeated here.

In the embodiments of the present disclosure, the tracking shot device can determine the clicked image area by obtaining the click operation on the screen displaying the preview image. By using the click operation, not only the clicked image area can be obtained from a normal size screen, but the clicked image area can also be automatically obtained from a smaller screen based on the click operation. The obtained object feature information used to describe the target object and display position information can be send to the imaging device, such that the imaging device can initialize the object feature information. After initialization, the tracking shot can be performed on the target object to obtain the target image based on the obtained display position information.

Refer to FIG. 6. FIG. 6 is a flowchart of another tracking shot method according to an embodiment of the present disclosure. The method may be executed by a tracking shot device, where the specific explanation of the tracking shot device may be as described above. More specifically, the method of the embodiments of the present disclosure includes the following processes.

S601, obtaining the frame selection operation on the screen displaying the preview image.

In the embodiments of the present disclosure, the tracking shot device may be configured to obtain the frame selection operation on the screen displaying the preview image. In some embodiments, the screen displaying the preview image may be the screen of the tracking shot device, or the screen of the mobile terminal that can establish a communication connection with the tracking shot device. In one embodiment, the tracking shot device may obtain the frame selection operation on the screen of the tracking shot device displaying the preview image. Alternatively, the tracking shot device may obtain the frame selection operation on a screen displaying the preview image that can establish a communication connection with the tracking shot device.

S602, determining the frame selected image area based on the frame selection operation, and obtaining the object feature information used to describe the target object in the frame selected image area based on the frame selected image area.

In the embodiments of the present disclosure, the tracking shot device may be configured to determine the frame selected image area based on the obtained frame selection operation, and obtain the object feature information used to describe the target object in the frame selected image area based on the frame selected image area. In one embodiment, the tracking shot device may obtain the frame selection operation on the screen of the mobile terminal displaying the preview image, determine the frame selected image area based on the frame selection operation, and calculate the length, width, coordinate information, etc. of the frame selected image area to describe the object feature information of the target object in the frame selected image area. In one embodiment, the tracking shot device may obtain the frame selection operation on the screen of the tracking shot device displaying the preview image, determine the frame selected image area based on the frame selection operation, and calculate the length, width, coordinate information, etc. of the frame selected image area to describe the object feature information of the target object in the frame selected image area. The specific examples are as described above, and will not be repeated here.

S603, obtaining the display position information of the target object set on the screen displaying the preview image.

In the embodiments of the present disclosure, the tracking shot device may be configured to obtain the display position information of the target object set on the screen displaying the preview image. In one embodiment, the tracking shot device may obtain the display position information of the target object set by the user on the screen of the tracking shot device. Alternatively, the tracking shot device may obtain the display position information of the target object set by the user on the screen of the mobile terminal that can establish a communication connection with the tracking shot device. The specific examples are as described above, and will not be repeated here.

In one embodiment, the tracking shot device may obtain a click operation on the position indication information included in the menu set on the screen displaying the preview image, and determine the display position information of the target object based on the obtained position indication information determined by the click operation.

The details can be illustrated by using FIG. 3B as an example. The tracking shot device may obtain a click operation on the position indication information options included in a menu 32 the tracking shot device screen displaying the preview image. Assume that the user clicks on a center 321 option in the menu 32, the tracking shot device may determine the position indication information of the target object as the center position on the screen displaying the preview image based on the obtained center position indication information determined by the click operation. If the user clicks on a cancel 324 option, the tracking shot device may cancel the display position information set for the target object as the center position on the screen displaying the preview image, and reset the display position information of the target object

In another example, assume that the tracking shot device obtains the user's click operation on the current position option in the menu 32, the tracking shot device may obtain the position indication information of the current position 322 determined by the click operation, and determine the display position information of the target object as the current position of the target object on the screen displaying the preview image. Similarly, if the user clicks on the cancel 324 option, the tracking shot device may cancel the display position information set for the target object as the current position on the screen displaying the preview image, and the user may reset the display position information of the target object.

In one embodiment, the tracking shot device may obtain the drag operation on the determined frame selected image area, and determine the display position information based on the obtained position information of the frame selected image area dragged by the drag operation. The details can be illustrated by using FIG. 3B as an example. Assume that the tracking shot device obtains the user's click operation on a customize 323 option in the menu 32, the user may drag the frame selected image area 31 of the target object to any position on the screen displaying the preview image, and use the position of the frame selected image area 31 after dragging as the display position information of the target object. In another example, the tracking shot device may directly drag the frame selected image area 31 of the target object to any position without obtaining the click operation on the customize 323 option in the menu 32, and use the position of the frame selected image area 31 after dragging as the display position information of the target object.

S604, sending the obtained object feature information used to describe the target object and the display position information to the imaging device.

In the embodiments of the present disclosure, the tracking shot device may be configured to send the obtained object feature information used to describe the target object and the display position information to the imaging device, such that the imaging device may initialize the object feature information, and perform tracking shot on the target object to obtain the target image based on the obtained display position information after initialization. The specific example is as described above, and will not be repeated here.

In the embodiments of the present disclosure, the tracking shot device can determine the frame selected image area by obtaining the frame selection operation on the screen displaying the preview image, and send the obtained object feature information used to describe the target object and the display position information to the imaging device, such that the imaging device can initialize the object feature information. After initialization, the tracking shot can be performed on the target object to obtain the target image based on the obtained display position information.

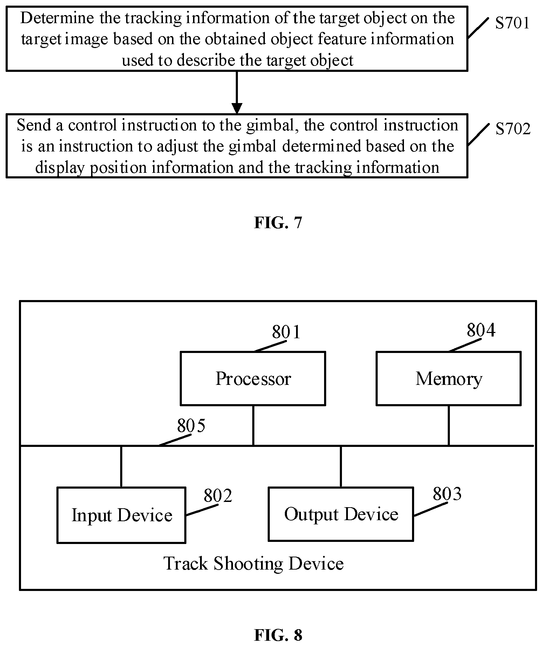

Refer to FIG. 7. FIG. 7 is a flowchart of another tracking shot method according to an embodiment of the present disclosure. The method may be executed by a tracking shot device, where the specific explanation of the tracking shot device may be as described above. More specifically, the method of the embodiments of the present disclosure includes the following processes.

S701, determining the tracking information of the target object on the target image based on the obtained object feature information used to describe the target object.

In the embodiments of the present disclosure, after controlling the imaging device to perform tracking shot on the target object to obtain the target image, the tracking shot device may determine the tracking information of the target object on the target image based on the obtained object feature information used to describe the target object. In some embodiments, the tracking information of the target object may include the object feature information such as the size information and the coordinate information of the image area occupied by the target object on the target image obtained by the imaging device performing the tracking shot, and the display position information of the target object in the target image.

S702, sending a control instruction to the gimbal, the control instruction may be an instruction to adjust the gimbal determined based on the display position information and the tracking information.

In the embodiments of the present disclosure, the tracking shot device may be configured to send a control instruction to the gimbal after obtaining the tracking information of the target image, where the control instruction may be an instruction for adjusting the gimbal determined based on the display position information and the tracking information. In one embodiment, the tracking shot device may determine the confidence of the target image based on the object feature information obtained from the preview image and the tracking information determined from the target image. In some embodiments, the confidence may be used to indicate the tracking accuracy of the target image obtained by the imaging device performing tracking shot on the target object determined from the preview image. For example, assume that the object feature information obtained by the tracking shot device on the preview image is the length, width, and GPS coordinate position of the frame selected image area. If the tracking shot device determines the length, width, and GPS coordinate position, that is, the tracking information, of the target image obtained by the imaging device performing the tracking shot, then the tracking shot device can calculate the confidence of the target image.

In one embodiment, when the tracking shot device determines the control instruction based on the confidence, it may detect whether the obtained confidence is less than a predetermined threshold. When the confidence is detected to be less than the predetermined threshold, the tracking shot device may perform a full image detection on the target image. If a target object is detected in the full image, the detection position information of the target object in the target image may be obtained, and the control instruction for adjusting the gimbal may be determined based on the detection position information and the display position information.

For example, assume that the tracking shot device determines that the GPS coordinate position of the target image is far from the GPS coordinate position of the frame selected area obtained from the preview image, such that the calculate confidence is less than the predetermined threshold. The tracking shot device may perform a full image detection on the target image. If a target object is detected in the full image, the detection position information of the target object in the target image may be obtained, and the control instruction may be determined based on the detection position information and the display position information. In some embodiments, the control instruction may be used to adjust the gimbal, such that the object feature information of the target object in the target image captured by the imaging device may be the same as the object feature information of the target object set in the preview image.

In one embodiment, the tracking shot device may be configured to determine a rotation angle of the gimbal based on the obtained detection position information of the target object in the target image and the display position information, and generate the control instruction containing the rotation angle. In some embodiments, the control instruction may be used to control the gimbal to rotate based on the rotation angle. In a specific implementation process, the tracking shot device may calculate the difference between the object feature information of the target object on the target image and the object feature information of the target object set on the preview image based on the obtained detection position information of the target object in the target image and the display position information, determine the rotation angle of the gimbal based on the difference, and generate the control instruction containing the rotation angle to control the gimbal to rotate based on the rotation angle. As such, the imaging device carried by the gimbal may follow the rotation of the gimbal to adjust the imaging angle, such that the object feature information of the target object on the target image captured by the imaging device may be the same as the object feature information of the target object set on the preview image, which can further improve the efficiency of tracking shot.

In the embodiments of the present disclosure, the tracking shot device can determine the confidence of the target image by obtaining the tracking information of the target image. When the confidence is less than the predetermined threshold, a full image detection can be performed on the target image. If a target object exists in the detection result, the rotation angle of the gimbal can be determined based on the detection position information and the display position information, and the control instruction containing the rotation angle may be generated to control the gimbal to rotate based on the rotation angle, such that the imaging angle of the imaging device carried by the gimbal can be adjusted to obtain a target image that is the same as the object feature information set on the preview image. By using this method, the result of tracking shot can be further detected and adjusted, which can improve the accuracy of tracking shot.

Refer to FIG. 8. FIG. 8 is a schematic structural diagram of a tracking shot device according to an embodiment of the present disclosure. More specifically, the tracking shot device include one or more processors 801, one or more input devices 802, one or more output devices 803, and a memory 804. The processor 801, input device 802, output device 803, and memory 804 mentioned above are connected by a bus 805. The memory 804 may be used to store instructions, and the processor 801 may be configured to execute the instructions stored in the memory 804. When the program instructions are executed by the processor 801, the processor 801 performs the following processes: determining the object feature information used to describe the target object based on the obtained tracking trigger operation, obtaining the display position information of the target object set on the screen displaying the preview image, and controlling the imaging device to perform tracking shot on the target object to obtain a target image based on the object feature information and the display position information.

Further, the tracking trigger operation may include a click operation.

The processor 801 can execute the program instructions stored in the memory 804 to perform the following processes: obtaining the click operation on the screen displaying the preview image, determining the clicked image area based on the click operation, and obtaining the object feature information used to describe the target object in the clicked image area based on the clicked image area.

In some embodiments, the click operation may include a single click operation or a double click operation on the screen displaying the preview image.

Further, The processor 801 can execute the program instructions stored in the memory 804 to perform the following processes: obtaining the target point determined by the click operation, performing an object estimation detection on the preview image with the target point as the center to determine the target object, determining the clicked image area based on the target object, and obtaining the object feature information used to describe the target object in the clicked image area.

Further, The processor 801 can execute the program instructions stored in the memory 804 to perform the following processes: obtaining the target point determined by the click operation, taking the target point as the center and performing image enlargement processing on the preview image based on the predetermined ratio, obtaining the frame selected image area determined by the frame selection operation of the enlarged preview image, and obtaining the object feature information describing the target object in the frame selected image area based on the frame selected image area.

Further, The processor 801 can execute the program instructions stored in the memory 804 to perform the following processes: obtaining the frame selection operation on the screen displaying the preview image, determining the frame selected image area based on the frame selection operation, and obtaining the object feature information used to describe the target object in the frame selected image area based on the frame selected image area.

In some embodiments, the object feature information may include any one or more of the length, width, coordinate information, etc. of the image area.

Further, The processor 801 can execute the program instructions stored in the memory 804 to perform the following processes: obtaining the click operation of the position indication information included in the menu set of the screen displaying the preview image, and determining the display position information of the target object based on the obtained position indication information determined by the click operation.

Further, The processor 801 can execute the program instructions stored in the memory 804 to perform the following processes: obtaining the drag operation on the determined clicked image area, and determining the display position information based on the obtained position information of the clicked image area after the dragging of the drag operation.

Further, The processor 801 can execute the program instructions stored in the memory 804 to perform the following processes: obtaining the drag operation on the determined frame selected image area, and determining the display position information based on the obtained position information of the frame selected image area after the dragging of the drag operation.

Further, The processor 801 can execute the program instructions stored in the memory 804 to perform the following process: sending the obtained object feature information used to describe the target object and the display position information to the imaging device, such that the imaging device may initialize the object feature information, and perform tracking shot on the target object to obtain the target image based on the obtained display position information after initialization.

Further, The processor 801 can execute the program instructions stored in the memory 804 to perform the following processes: determining the tracking information of the target object on the target image based on the obtained object feature information used to describe the target object, and sending the control instruction to the gimbal, the control instruction may be an instruction to adjust the gimbal determined based on the display position information and the tracking information.

Further, when executed by the processor 801, the program instructions stored in the memory 804 can cause the processor 801 to determine the confidence of the target image based on the object feature information obtained from the preview image and the tracking information determined from the target image, where the confidence may be used to indicate the tracking accuracy of the target image obtained by the imaging device performing tracking shot on the target object determined from the preview image; and determine the control instruction based on the confidence.

Further, The processor 801 can execute the program instructions stored in the memory 804 to perform the following processes: performing a full image detection when the confidence is less than the predetermined threshold, obtaining the detection position information of the target object in the target image if there is a target object in the detection result, and determining the control instruction based on the detection position information and the display position information.

Further, The processor 801 can execute the program instructions stored in the memory 804 to perform the following processes: determining the rotation angle of the gimbal based on the detection position information and the display position information, and generating the control instruction containing the rotation angle, the control instruction may be used to control the gimbal to rotate based on the rotation angle.

It should be understood that, in the embodiments of the present disclosure, the processor 801 may be a central processing unit (CPU). The processor may also be another general purpose processor, a digital signal processor (DSP), an application specific integrated circuit (ASIC), a field-programmable gate array (FPGA), or another programmable logic device, a discrete gate or transistor logic device, a discrete hardware components, etc. The general purpose processor may be a microprocessor, or the processor may also be any conventional processor or the like.

The input device 802 may include a touch panel, a fingerprint sensor (for collecting user fingerprint information and fingerprint orientation information), a microphone, etc., and the output device 803 may include a display (LCD, etc.), a speaker, etc.

The memory 804 may include a read-only memory and a random access memory, and provide instructions and data to the processor 801. A part of the memory 804 may also include a non-volatile random access memory. For example, the memory 804 may also store device type information.

For the specific implementation of the processor 801 in the embodiments of the present disclosure, reference may be made to the description of the relevant content in the foregoing embodiments, which will not be repeated here.

In the embodiments of the present disclosure, the tracking shot device can determine the object feature information used to describe the target object through the obtained tracking trigger operation, thereby determining the target object; and determine the display position of the target object on the screen by obtaining the display position information of the target object set on the screen displaying the preview image to control the imaging device to perform tracking shot on the target object to obtain the target image. In addition, after obtaining the target image, the tracking shot device can determine the tracking information of the target object on the target image, and send a control instruction to the gimbal to control the gimbal to rotate based on the control instruction. By using this method, the tracking shot of the target object can be realized, and the imaging angle of the imaging device can be adjusted by control the rotation of the gimbal, such that the tracking shot of the imaging device can obtain more accurate target images, thereby improving the efficiency of tracking shot

An embodiment of the present disclosure further provides a computer-readable storage medium. The computer-readable storage medium can store a computer program. When the computer program is executed by a processor, the tracking shot method described in the embodiment corresponding to FIG. 1, FIG. 5, FIG. 6, or FIG. 7 of the present disclosure can be implemented, and the tracking shot device corresponding to the embodiments of the present disclosure described in FIG. 8 can be implemented, and details are not repeated here.

The computer-readable storage medium may be an internal storage unit of the device described in any of the foregoing embodiments, such as the hard disk or memory of the device. The computer-readable storage medium may also be an external storage device of the device, such as a plug-in hard disk, a smart media card (SMC), a secure digital (SD) card, a flash card, etc. disposed on the device. Further, the computer-readable storage medium may also include both an internal storage unit and an external storage device. The computer-readable storage medium is configured to store the computer program and other programs and data needed by the device. The computer readable storage medium may also be used to temporarily store data that has been or will be output.

The above disclosure merely constitutes a part of the embodiments of the present disclosure, and the scope of rights of the present disclosure should not be limited thereto. Therefore, equivalent changes made according to the claims of the present disclosure still fall within the scope of the present invention.

## Claims

1. A tracking shot method comprising:
determining object feature information used to describe a target object based on an obtained tracking trigger operation;
obtaining display position information of the target object set on a screen displaying a preview image; and
controlling an imaging device to perform tracking shot on the target object to obtain a target image based on the object feature information and the display position information.

2. The method of claim 1, wherein:
the tracking trigger operation includes a click operation; and
determining the object feature information used to describe the target object based on the obtained tracking trigger operation includes:
obtaining the click operation on the screen displaying the preview image; and
determining a clicked image area based on the click operation, and obtaining the object feature information used to describe the target object in the clicked image area based on the clicked image area.

3. The method of claim 2, wherein:
the click operation includes a single click operation, a double click operation, or a long press operation on the screen displaying the preview image.

4. The method of claim 2, wherein obtaining the object feature information used to describe the target object in the clicked image area based on the clicked image area includes:
obtaining a target point determined by the click operation;
performing an object estimation detection on the preview image with the target point as a center, to determine the target object;
determining the clicked image area based on the target object; and
obtaining the object feature information used to describe the target object in the clicked image area.

5. The method of claim 2, wherein obtaining the object feature information used to describe the target object in the clicked image area based on the clicked image area includes:
obtaining a target point determined by the click operation;
performing image enlargement processing on the preview image based on a predetermined ratio and with the target point as a center;
obtaining a frame selected image area determined by a frame selection operation on the enlarged preview image; and
obtaining the object feature information used to describe the target object in the frame selected image area based on the frame selected image area.

6. The method of claim 1, wherein:
the tracking trigger operation includes a frame selection operation; and
determining the object feature information used to describe the target object based on the obtained tracking trigger operation includes:
obtaining the frame selection operation on the screen displaying the preview image; and
determining a frame selected image area based on the frame selection operation, and obtaining the object feature information used to describe the target object in the frame selected image area based on the frame selected image area.

7. The method of any one of claims 1 to 6, wherein:
the object feature information includes any one or more of a length, a width, and coordinate information of an image area.

8. The method of claim 1, wherein obtaining the display position information of the target object set on the screen displaying the preview image includes:
obtaining a click operation on position indication information included in a menu set on the screen displaying the preview image; and
determining the display position information of the target object based on the obtained position indication information determined by the click operation.

9. The method of claim 2, wherein obtaining the display position information of the target object set on the screen displaying the preview image includes:
obtaining a drag operation on the determined clicked image area; and
determining the display position information based on the obtained position information of the clicked image area after the drag operation.

10. The method of claim 4 or 6, wherein determining the display position information of the target object set on the screen displaying the preview image includes:
obtaining a drag operation on the determined frame selected image area; and
determining the display position information based on the obtained position information of the frame selected image area after the drag operation.

11. The method of claim 1, wherein controlling the imaging device to perform tracking shot on the target object to obtain the target image based on the object feature information and the display position information includes:
sending the obtained object feature information used to describe the target object and the display position information to the imaging device for the imaging device to initialize the object feature information and perform tracking shot on the target object to obtain the target image based on the obtained display position information after the initialization.

12. The method of claim 1, further comprising, after controlling the imaging device to perform tracking shot on the target object to obtain the target image:
determining tracking information of the target object on the target image based on the obtained object feature information used to describe the target object; and
sending a control instruction to a gimbal, the control instruction being an instruction for adjusting the gimbal determined based on the display position information and the tracking information.

13. The method of claim 12, wherein sending the control instruction to the gimbal includes:
determining a confidence of the target image based on the object feature information obtained from the preview image and the tracking information determined from the target image, the confidence being used to indicate a tracking accuracy of the target image obtained by the imaging device performing tracking shot on the target object determined from the preview image; and
determining the control instruction based on the confidence.

14. The method of claim 13, wherein determining the control instruction based on the confidence includes:
performing a full image detection on the target image if the confidence is less than a predetermined threshold;
obtaining detection position information of the target object in the target image if the target object exists in a detection result; and
determining the control instruction based on the detection position information and the display position information.

15. The method of claim 14, wherein determining the control instruction based on the detection position information and the display position information includes:
determining a rotation angle of the gimbal based on the detection position information and the display position information; and
generating the control instruction containing the rotation angle, the control instruction being used to control the gimbal to rotate based on the rotation angle.

16. A tracking shot device comprising:
a memory storing program instructions; and
a processor configured to:
determine object feature information used to describe a target object based on an obtained tracking trigger operation;
obtain display position information of the target object set on a screen displaying a preview image; and
control an imaging device to perform tracking shot on the target object to obtain a target image based on the object feature information and the display position information.

17. The device of claim 16, wherein:
the tracking trigger operation includes a click operation; and
the processor is configured to:
obtain the click operation on the screen displaying the preview image; and
determine a clicked image area based on the click operation, and obtain the object feature information used to describe the target object in the clicked image area based on the clicked image area.

18. The device of claim 17, wherein:
the click operation includes a single click operation, a double click operation, or a long press operation on the screen displaying the preview image.

19. The device of claim 17, wherein the processor is configured to:
obtain a target point determined by the click operation;
perform an object estimation detection on the preview image with the target point as a center, to determine the target object;
determine the clicked image area based on the target object; and
obtain the object feature information used to describe the target object in the clicked image area.

20. The device of claim 17, wherein the processor is further configured to:
obtain a target point determined by the click operation;
perform image enlargement processing on the preview image based on a predetermined ratio and with the target point as a center;
obtain a frame selected image area determined by a frame selection operation on the enlarged preview image; and
obtain the object feature information used to describe the target object in the frame selected image area based on the frame selected image area.

21. The device of claim 16, wherein:
the tracking trigger operation includes a frame selection operation; and
the processor is configured to:
obtain the frame selection operation on the screen displaying the preview image; and
determine the frame selected image area based on the frame selection operation, and obtain the object feature information used to describe the target object in the frame selected image area based on the frame selected image area.

22. The device of any one of claims 16 to 21, wherein:
the object feature information includes any one or more of a length, a width, and coordinate information of an image area.

23. The device of claim 16, wherein the processor is configured to:
obtain a click operation on position indication information included in a menu set on the screen displaying the preview image; and
determine the display position information of the target object based on the obtained position indication information determined by the click operation.

24. The device of claim 17, wherein the processor is configured to:
obtain a drag operation on the determined clicked image area; and
determine the display position information based on the obtained position information of the clicked image area after the drag operation.

25. The device of claim 19 or 21, wherein the processor is configured to:
obtain a drag operation on the determined frame selected image area; and
determine the display position information based on the obtained position information of the frame selected image area after the drag operation.

26. The device of claim 16, wherein the processor is configured to:
send the obtained object feature information used to describe the target object and the display position information to the imaging device for the imaging device to initialize the object feature information and perform tracking shot on the target object to obtain the target image based on the obtained display position information after the initialization.

27. The device of claim 16, wherein the processor is further configured to:
determine tracking information of the target object on the target image based on the obtained object feature information used to describe the target object; and
send a control instruction to a gimbal, the control instruction being an instruction for adjusting the gimbal determined based on the display position information and the tracking information.

28. The device of claim 27, wherein the processor is configured to:
determine a confidence of the target image based on the object feature information obtained from the preview image and the tracking information determined from the target image, the confidence being used to indicate a tracking accuracy of the target image obtained by the imaging device performing tracking shot on the target object determined from the preview image; and
determine the control instruction based on the confidence.

29. The device of claim 28, wherein the processor is configured to:
perform a full image detection on the tracking shot if the confidence is less than a predetermined threshold;
obtain detection position information of the target object in the target image if the target object exists in a detection result; and
determine the control instruction based on the detection position information and the display position information.

30. The device of claim 29, wherein the processor is configured to:
determine a rotation angle of the gimbal based on the detection position information and the display position information; and
generate the control instruction containing the rotation angle, the control instruction being used to control the gimbal to rotate based on the rotation angle.

31. A computer-readable storage medium comprising:
a computer program stored in the computer-readable storage medium, wherein when the computer program is executed by a processor, the method according to any one of claims 1 to 15 is implemented.
